# EUROPEAN PATENT APPLICATION

(11) **EP 4 780 035 A1**
(43) Date of publication of application: **22.07.2026**
(21) Application number: 25382027.8
(22) Date of filing: 17.01.2025
(51) Int. Cl.: H04W 12/04, G06Q 20/34, G06Q 20/38, H04L 9/08

(54) **METHOD AND SYSTEM FOR INITIALIZING A DATA CARRIER AS WELL AS METHOD AND SYSTEM FOR RESTORING A USER KEY**

(71) Applicant: Giesecke+Devrient ePayments GmbH, 81677 München (DE)
(72) Inventor: GATIRAGAS, Alex, 00180 Helsinki (FI); LATORRE, Azalya, 00180 Helsinki (FI); MAYOR, Eduard, 08820 El Prat de Llobregat (ES)
(74) Representative: LKGLOBAL Partnerschaftsgesellschaft mbB

(57) **Abstract**

The invention relates to a method of initializing a data carrier (10). The method comprises providing personalization data (21, S110), using the personalization data (21) and a personalization entity key (32) to generate a main shard (33, S120), establishing a connection (41) between a mobile device (40) and a data carrier (10, S130), activating the data carrier (10) by generating at least a first shard (51) and a second shard (61) by a secure element (12) of the data carrier (10, S140), transmitting the first shard (51) to a first server entity (50) and the second shard (61) to a second server entity (60, S150), and storing the first and the second shard (61) in the first and the second server entity (50, 60), respectively (S160). The invention also relates to a method of restoring a user key, as well as to a system (1) for initializing a data carrier (10) and to a system (2) for restoring a user key.

## Description

The present invention relates to data carrier security management using a sharding process. In particular, the present invention relates to a method and a system for initializing a data carrier as well as to a method and a system for restoring a user key.

Data carriers, in particular, card-like data carriers are widely used in a variety of systems such as payment cards, credit cards, access cards, identity cards to provide identification, authentication, payment, access etc. Before granting access to a functionality of the data carrier, authentication procedures to authenticate and verify the identity of a user of the data carrier are usually required. Such authentication procedures encompass the usage of remote identity verification processes, for example when applying for a bank account, an insurance or other security-related services. For example, biometric authentication is widely recognized as a robust and secure method for verifying an individual's identity.

If a data carrier is lost, a new data carrier will usually be sent to the user once an identity of the user has been confirmed. However, upon receiving the new data carrier, the user may be required to restore specific functions provided by the data carrier. In particular, access to specific data or content provided by the data carrier may be denied until the specific functions provided by the data carrier have been restored. The restoration process usually involves processing secret data which is known only to specific entities. This secret data is often targeted by fraudulent activity.

It may be seen as an object of the invention to provide a more secure process for restoring user access to functionalities provided by a data carrier.

Two methods and two system according to the features of the independent claims are provided. Further embodiments of the invention are evident from the dependent claims, the figures and the following description.

According to an aspect of the invention, a method of initializing a data carrier, for example a card-like data carrier, is provided. A step of the method comprises providing personalization data by an issuer entity. Another step of the method comprises using the personalization data and a personalization entity key to generate a main shard by a secure element (SE) of a data carrier. Another step of the method comprises establishing a connection between a mobile device and the data carrier. Another step of the method comprises activating the data carrier using the mobile device, wherein activating the data carrier comprises generating at least a first shard and a second shard by the secure element of the data carrier. Another step of the method comprises transmitting the first shard to a first server entity and transmitting the second shard to a second server entity. Another step of the method comprises storing the first shard in the first server entity and storing the second shard in the second server entity. The method steps may be carried out in the indicated order.

The inventive method provides an initialization process in preparation to a user key restoration process that will be further described hereinbelow. The initialization process may thus be the first stage within a more secure process for restoring user access to functionalities provided by a data carrier. In particular, the initialization process allows a secure distribution of shards among different servers, thereby allowing each shard in the respective servers to be retrieved during a later restoration process where a user key, herein also referred to as master key, is restored to enable the user to access the specific functionalities provided by the data carrier, for example access to a digital asset and/or a bank account of the user.

In other words, the initialization process together with the restoration process that will be described hereinbelow may provide a sharding process for the management of distributed recovery services of digital assets in a secure way, e.g., by leveraging established card management systems and procedures in payment card personalization centers. The initialization process involves the distribution of multiple shards of associated keys across several secure parties, e.g., entities, thereby enhancing the security of digital asset custody. By dividing the keys into multiple shards, the exposure of the keys to fraudulent activity may be reduced or completely prevented. This solution does not only mitigate the risk of compromising the keys but also provides a robust system for managing for example digital assets securely.

As indicated above, the inventive methods and systems may require adapting currently existing processes for sharing sensitive data files between card vendors and card issuers. However, the inventive methods and systems ensure that the shards, for example of a self-custody wallet, are handled with a high level of security. In particular, the inventive methods and systems simplify the integration of a distributed recovery system for cold wallet solutions into existing issuer infrastructures, thereby minimizing the risk of unauthorized access or data breaches.

First, the method of initializing a data carrier, herein also referred to as initialization process, will be described in more detail.

A step of the method comprises providing personalization data by an issuer entity. The personalization data may represent a so-called card ID which comprises data like issuer ID, customer or user ID, company ID, manufacturing information, and further data or random information. For example, a name, a PAN, a card PIN, etc. may be included as information. The card ID may be a 32-byte card ID which is shared by the issuer entity. For example, if a user requests a data carrier, e.g., a card-like data like a cold wallet card, encrypted data containing the personalization data, e.g., the 32-byte card ID, will be provided by the issuer entity.

This personalization data may be encrypted and/or forwarded to a personalization entity. The personalization data may further be stored at the issuer entity, for example in the context of a customer-relationship management (CRM) provided by the issuer entity. Preferably, the personalization data is only stored at the issuer entity.

Once the personalization data was forwarded to the personalization entity, the personalization entity may provide a personalization entity key which for instance is stored in a storage module, e.g., in a hardware secure module (HSM), of the personalization entity. Another step of the method comprises using the personalization data and the personalization entity key to generate a main shard by a secure element of a data carrier.

In particular, the data carrier may comprise the secure element which is a secure operating system in a chip of the data carrier. This secure element itself may generate, e.g., calculate, the main shard based on the personalization data and a personalization entity key.

A shard may be a key fragment or key partition. In other words, a shard may be generated by fractionalizing a key. The main shard, herein also referred to as anchor shard, may be generated within the secure element. In particular, the main shard may be calculated by the secure element after production of the data carrier into which the secure element is integrated. This means that the calculation of the main shard may carried out only during personalization of the data carrier when the personalization data and the personalization entity key are available to the secure element.

Afterwards, the data carrier together with the main shard may be sent to the user where the activation of the data carrier can be initiated. Therefore, in another step of the method, the connection between the mobile device and the data carrier is established. The connection between the mobile device and the data carrier may be based on Near Field Communication (NFC) technology. The mobile device may be a mobile computing device, a mobile phone, e.g., a smartphone, a tablet computer, or another portable or handheld computing device.

After establishing the connection between the mobile device and the data carrier, the data carrier is activated in another step using the mobile device, wherein activating the data carrier comprises generating a first shard and a second shard by the secure element of the data carrier. In particular, the main shard may be used to generate first shard and the second shard. There may be a mathematical and/or cryptographical correlation between the main shard and the first and/or the second shard. For example, if the main shard and the first shard is known, the second shard may be calculated using the mathematical and/or cryptographical correlation. Analogously, if the main shard and the second shard is known, the first shard may also be calculated using the mathematical and/or cryptographical correlation. In this manner, it is possible to reconstruct one of the first shard or the second shard when only one of them is known, which may be leveraged during the user key restoration process as will be described hereinbelow.

The user may activate the data carrier by scanning the data carrier with a mobile application manager stored on the mobile device. This activation may trigger the creation of the two additional shards, i.e., the first shard and the second shard, within the secure element of the data carrier. It is preferred that only the secure element is enabled to generate the first shard and the second shard.

Another step of the method comprises transmitting the first shard to the first server entity and the second shard to the second server entity, thereby allowing, in another step, a storage of the first shard in the first server entity, e.g., a first so-called zero knowledge (ZK) vault, and a storage of the second shard in the second server entity, e.g., a second so-called zero knowledge (ZK) vault. In particular, the first shard is only stored in the first server entity and the second shard is only stored in the second server entity. This means that no other entity or party may be aware of the first shard and the second shard, except the first server entity and the second server entity, respectively. The first and second shards may thus be stored in separate and independent entities.

According to an embodiment, activating the data carrier further comprises verifying a restoration functionality provided by the first shard and a restoration functionality provided by the second shard.

In particular, before the data carrier is ready to be used by the user for accessing specific functionalities or content, like for instance a digital asset of the user and/or a bank account of the user, the function of a possible future key restoration process may be ensured by an initial test procedure in which the integrity of the key restoration using the shards is verified. In other words, an initial restoration step for restoring a user key may be integrated into the activation step.

According to an embodiment, the restoration functionality provided by the first shard is verified by retrieving, by the mobile device, the first shard from the first server entity. Additionally or alternatively, the restoration functionality provided by the second shard is verified by retrieving, by the mobile device, the second shard from the second server entity.

In a preferred example, both the first shard and the second shard are retrieved from the respective server entities. This means that the first shard may be individually used together with the main shard to restore the user key and, additionally, the second shard may be individually used together with the main shard to restore the user key.

According to an embodiment, activating the data carrier comprises enabling at least one functionality provided by the data carrier upon a positive verification of the restoration functionality provided by the first shard and the restoration functionality provided by the second shard.

This means that, after the initial restoration step has been carried out successfully and the restoration functionality has thus been confirmed, the activation of the data carrier may be completed. Upon completion of the activation of the data carrier, the data carrier is ready for use. The use of the data carrier may comprise enabling functionalities for the user like allowing identification, authentication, payment, access etc. For example, the data carrier may enable access to a digital asset of the user and/or a bank account of the user.

According to an embodiment, the main shard is mathematically correlated to the first shard. Additionally or alternatively, the main shard is mathematically correlated to the second shard.

This allows a determination of the second shard if the main shard and the first shard is known. Analogously, this allows a determination of the first shard if the main shard and the second shard is known. It is thus not required to retrieve all shards from the different server entities during a later key restoration process. In particular, it may be sufficient to retrieve only one of the first shard or the second shard for the restoration process. For example, a user key (master key) allowing an access to a user content in connection with the data carrier may be restored by reconstructing the user key based on either the knowledge of the main shard and the first shard or the knowledge of the main shard and the second shard. A complete reconstruction of the user key during the restoration process may be possible in both ways.

According to an embodiment, the first shard and/or the second shard are generated by the secure element using a secret sharing algorithm.

In particular, the first shard and/or the second shard are generated based on the main shard using the secret sharing algorithm. For example, the so-called Shamir's secret sharing (SSS) may be applied to fractionalize the key(s), e.g., to generate the first shard and the second shard, based on the main shard. That is, in the context of the inventive initialization method, Shamir's secret sharing may be used as the secret sharing algorithm for distributing private information, e.g., the shards, among a group of server entities. Consequently, during the restoration process of the user key, the Shamir's secret sharing algorithm may also be used to reconstruct the user key based on the main shard together with one of the first shard or the second shard.

According to an embodiment, the method comprises encrypting the first shard by the secure element before transmitting the first shard to the first server entity. Alternatively or additionally, the method comprises encrypting the second shard by the secure element before transmitting the second shard to the second server entity.

This further improves the security during the distribution of the private information, including the shards, among the server entities. For example, a public key encryption may be used to encrypt the first shard, possibly together with further private information, and/or to encrypt the second shard, possibly together with further private information.

According to an embodiment, transmitting the first shard to the first server entity comprises transmitting the first shard from the secure element of the data carrier to the mobile device and subsequently transmitting the first shard from the mobile device to the first server entity. Alternatively or additionally, transmitting the second shard to the second server entity comprises transmitting the second shard from the secure element of the data carrier to the mobile device and subsequently transmitting the second shard from the mobile device to the second server entity.

This means that, during the activation of the data carrier, the first shard may be transferred from the data carrier to the first server via the mobile device and/or the second shard may be transferred from the data carrier to the second server via the mobile device. This may further ensure that the shards are securely distributed among the correct server entities.

According to an embodiment, the data carrier is a card-like data carrier, in particular a chip card, a payment card, an identity card or a smart card. However, other data carriers may also be used with the inventive initialization method. The card-like data carrier may have the form of an ID1 card.

According to an aspect of the invention, a method of restoring a user key is provided. A step of the method comprises receiving a restoration request from a mobile device of a user at an issuer entity. Another step of the method comprises verifying an identity of the user of the mobile device at the issuer entity. Another step of the method comprises providing personalization data by the issuer entity upon positive verification of the identity of the user of the mobile device. Another step of the method comprises using the personalization data and a personalization entity key to generate a main shard by a secure element of a data carrier. Another step of the method comprises establishing a connection between the mobile device and the data carrier. Another step of the method comprises receiving at least a first shard from a first server entity by the secure element of the data carrier. Another step of the method comprises restoring a user key based on the received first shard from the first server entity and the generated main shard. The method steps may be carried out in the indicated order.

As indicated above, the restoration process may be a second stage in a more secure process for restoring user access to functionalities provided by the data carrier. The above-explained initialization process may thus be seen as a preparation, i.e., first stage, of the user key restoration process, wherein the user key restoration process will now be described in detail.

In a first step, the user may send a restoration request via the user's mobile device to an issuer entity, for example the same issuer entity that was part of the initialization process as described above and that maintains the personalization data. A user application on the mobile device may be used to send the request to the issuer entity.

Afterwards, the issuer entity may verify an identity of the user of the mobile device. To achieve this, the issuer entity may send an authentication request, e.g., a request for a strong customer authentication (SCA), to the mobile device of the user. The user may then verify its identity, for example by way of an authentication technique like biometric authentication or the like. Once the identity of the user is verified, the issuer entity may issue a backup or new data carrier, for example a card-like data carrier, including the personalization data maintained in the issuer entity. This personalization data may then be encrypted and/or forwarded to a personalization entity.

That is, upon positive verification of the identity of the user of the mobile device, the issuer entity may thus provide the personalization data to the personalization entity, e.g., the same personalization entity that was part of the initialization process as described above. In other words, a personalization request with the matching personalization information associated to the user, e.g., including the card ID, may be sent to the personalization entity.

The personalization data may be stored at the issuer entity, for example in the context of a customer-relationship management (CRM) provided by the issuer entity. Preferably, the personalization data is only stored at the issuer entity.

Once the personalization data was forwarded to the personalization entity, the personalization entity may provide the personalization entity key which may be maintained in a storage module, e.g., in a hardware secure module (HSM), of the personalization entity.

In another step, the personalization data and a personalization entity key are used to generate, e.g., calculate, a main shard by the secure element of the new data carrier. The main shard may match the main shard that was generated during the initialization process. As described above, the new data carrier may comprise the secure element which is a secure operating system in a chip of the new data carrier. This secure element itself may generate, e.g., calculate, the main shard based on the personalization data and a personalization entity key. As also explained above, a shard may be a key fragment or key partition and the main shard, herein also referred to as anchor shard, may be generated within the secure element. In particular, it may be calculated by the secure element after production of the new data carrier into which the secure element is integrated. This means that the calculation of the main shard may carried out only during personalization of the new data carrier when the personalization data and a personalization entity key are available to the secure element.

Afterwards, the new data carrier together with the main shard may be sent to the user where the activation of the new data carrier can be initiated. Therefore, in another step of the method, a connection between the mobile device and the new data carrier is established. The connection between the mobile device and the new data carrier may be based on Near Field Communication (NFC) technology.

Afterwards, the first shard is received from the first server entity by the secure element of the new data carrier. The user key can then be restored based on the received first shard from the first server entity and the generated main shard. The method steps may be carried out in the indicated order.

According to an embodiment, the method comprises receiving a second shard from a second server entity by the secure element of the data carrier and restoring the user key further based on the received second shard from the second server entity and the generated main shard.

This means that in the alternative to receiving the first shard, the second shard can be received from the second server entity by the secure element of the new data carrier. It is noted that a receipt of only one of the first shard or the second shard which have been stored in the first and second server entity, respectively, may be received and needed for restoration purposes. In other words, only one of the first shard or the second shard may be received by the secure element of the new data carrier, thereby enabling restoration of the user key, e.g., master key.

According to an embodiment, the user key is associated to a functionality provided by the data carrier.

This means that the user key, herein also referred to as master key, may be needed to unlock access to security-sensitive data and services. A functionality provided by the new data carrier after restoration may for instance encompass allowing identification, authentication, payment, access to various card services like banking services etc.

According to an embodiment, the method further comprises enabling access to a digital asset of the user and/or a bank account of the user upon restoring the user key.

In other words, all functionalities provided by the new data are ready to be used after the restoration has been successfully completed.

According to an aspect of the invention, a system for initializing a data carrier is provided. The system comprises an issuer entity configured to provide personalization data, a data carrier having a secure element configured to use the personalization data and a personalization entity key to generate a main shard. The system further comprises a mobile device configured to establish a connection to the data carrier, a first server entity and a second server entity. The mobile device is configured to activate the data carrier by causing the secure element of the data carrier to generate at least a first shard and a second shard. The mobile device is configured to retrieve the first shard and the second shard from the secure element of the data carrier and to transmit the first shard to the first server entity and the second shard to the second server entity. The first server entity is configured to store the first shard and the second server entity is configured to store the second shard. The inventive system, herein also referred to as initialization system, may be configured to perform the method of initializing a data carrier as described above.

The components and functionalities described with respect to the inventive method of initializing a data carrier also apply to the components and functionalities of the inventive initialization system.

According to a further aspect of the invention, a system for restoring a user key is provided. The system comprises a mobile device, a data carrier having a secure element, and an issuer entity configured to receive a restoration request from the mobile device and to verify an identity of a user of the mobile device. The issuer entity is configured to provide personalization data upon positive verification of the identity of the user of the mobile device. The secure element of the data carrier is configured to generate a main shard using the personalization data and a personalization entity key. The mobile device is configured to establish a connection to the data carrier and the secure element of the data carrier is configured to receive at least a first shard from a first server entity. The mobile device is configured cause the secure element of the data carrier to restore a user key based on the received first shard and the generated main shard. The inventive system, herein also referred to as restoration system, may be configured to perform the method of restoring a user key as described above.

The components and functionalities described with respect to the inventive method of restoring a user key also apply to the components and functionalities of the inventive restoration system.

Exemplary embodiments of the invention are explained in more detail below with reference to schematic drawings.
- Fig. 1: shows a schematic representation of a system for initializing a data carrier.
- Fig. 2: shows a schematic representation of a system for restoring a user key.
- Fig. 3: shows a flow diagram of a method for initializing a data carrier.
- Fig. 4: shows a flow diagram of a method for restoring a user key.

In the drawings, identical or functionally identical elements are provided with the same reference signs.

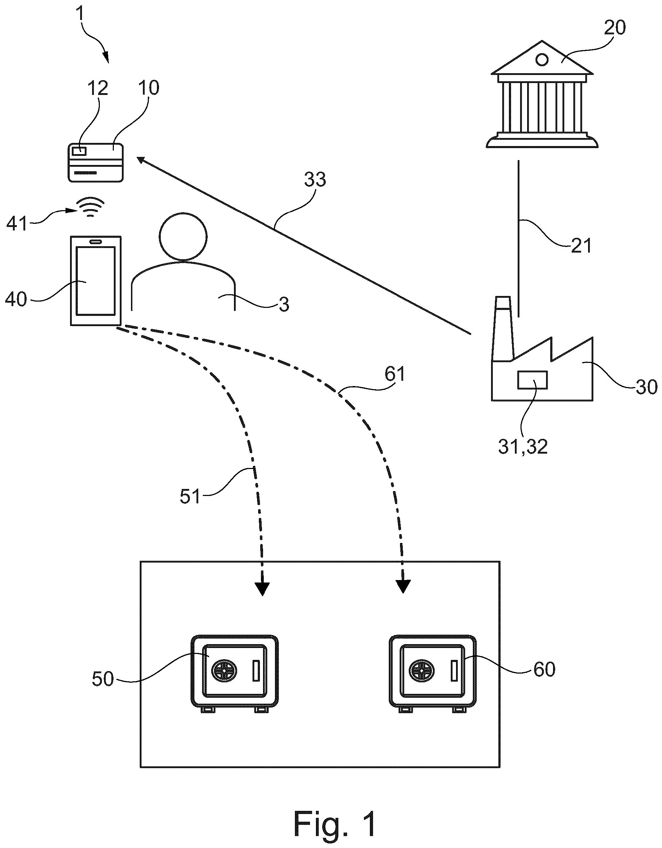

Fig. 1 shows a schematic representation of a system 1 for initializing a data carrier 10. In general, the system 1 comprises an issuer entity 20 configured to provide personalization data 21 and a personalization entity 30 configured to provide a personalization entity key 32. The system 1 further comprises a data carrier 10 having a secure element 12 configured to use the personalization data 21 and the personalization entity key 32 to generate a main shard 33. The system 1 further comprises a mobile device 40 configured to establish a connection 41 to the data carrier 10. Furthermore, the system 1 comprises a first server entity 50 and a second server entity 60. The mobile device 40 is configured to activate the data carrier 10 by causing the secure element 12 of the data carrier 10 to generate at least a first shard 51 and a second shard 61. The mobile device 40 is configured to retrieve the first shard 51 and the second shard 61 from the secure element 12 of the data carrier 10 and to transmit the first shard 51 to the first server entity 50 and the second shard 61 to the second server entity 60. The first server entity 50 is configured to store the first shard 51 and the second server entity 60 is configured to store the second shard 61.

In the following, the inventive initialization system 1 will be explained in more detail regarding the different steps performed by the different entities and components of the system 1.

In a first step, the issuer entity 20 provides personalization data 21. The personalization data 21 may represent a so-called card ID which comprises various data like issuer ID, customer or user ID, company ID, manufacturing information, and further data or random information. The card ID may be a 32-byte card ID which is shared by the issuer entity 20. For example, if a user 3 requests issuance of a data carrier 10, e.g., a card-like data carrier like a cold wallet card, encrypted data containing the personalization data 21 will be provided by the issuer entity 20.

In a further step, the personalization data 21 will then be encrypted and/or transmitted to the personalization entity 30. The personalization data 21 may further be stored at the issuer entity 20, for example in the context of a customer-relationship management (CRM) provided by the issuer entity 20. Preferably, the personalization data 21 is only stored at the issuer entity 20 and no other entity has access to the personalization data 21, except when the personalization data 21 is transmitted to the personalization entity 30.

Once the personalization data 21 was transmitted to the personalization entity 30, the personalization entity 30 may provide the personalization entity key 32 which for instance is stored in a storage module 31, such as a hardware secure module (HSM), of the personalization entity 30.

In a further step, the personalization data 21 and a personalization entity key 32 may be used to generate a main shard 33, in particular a key fragment or a key partition, by the secure element 12 of the data carrier 10. That is, the secure element 12 itself may generate, e.g., calculate, the main shard 33 based on the personalization data 21 transmitted from the issuer entity 20 and the personalization entity key 32 provided by the personalization entity 30.

The main shard 33, which is herein also referred to as anchor shard 33, may be generated within the secure element 12. In particular, it may be calculated by the secure element 12 after manufacturing the data carrier 10 into which the secure element 12 is embedded. In particular, the calculation of the main shard 33 may carried out only during personalization of the data carrier 10 when the personalization data 21 and a personalization entity key 32 are available to the secure element 12.

In a further step, the data carrier 10 together with the main shard 33 may be sent to the user 3 and the user 3 can start the activation of the data carrier 10. In a further step, a connection 41 between the mobile device 40 and the data carrier 10 is established, for example using Near Field Communication (NFC) technology.

In a further step, the data carrier 10 is activated using the mobile device 40, wherein a first shard 51 and a second shard 61 are generated by the secure element 12 of the data carrier 10. In particular, the main shard 33 may be used to generate first shard 51 and the second shard 61. For example, the user 3 may activate the data carrier 10 by scanning and/or connecting to the data carrier 10 with a mobile application manager stored on the mobile device 40, wherein this activation may trigger the creation of the first shard 51 and the second shard 61 within the secure element 12 of the data carrier 10. It is preferred that only the secure element 12 is enabled to generate the first shard 51 and the second shard 61.

In a further step, the first shard 51 is transmitted to the first server entity 50 and the second shard 61 is transmitted to the second server entity 60, thereby allowing a storage of the first shard 51 in the first server entity 50 and a storage of the second shard 61 in the second server entity 60. In particular, the first shard 51 is only stored in the first server entity 50 and the second shard 61 is only stored in the second server entity 60. This means that no other entity or party may be aware of the first shard 51 and the second shard 61, except the first server entity 50 and the second server entity 60, respectively. The first and second shards 51, 61 may thus be stored in separate and independent entities that may not have any access to each other.

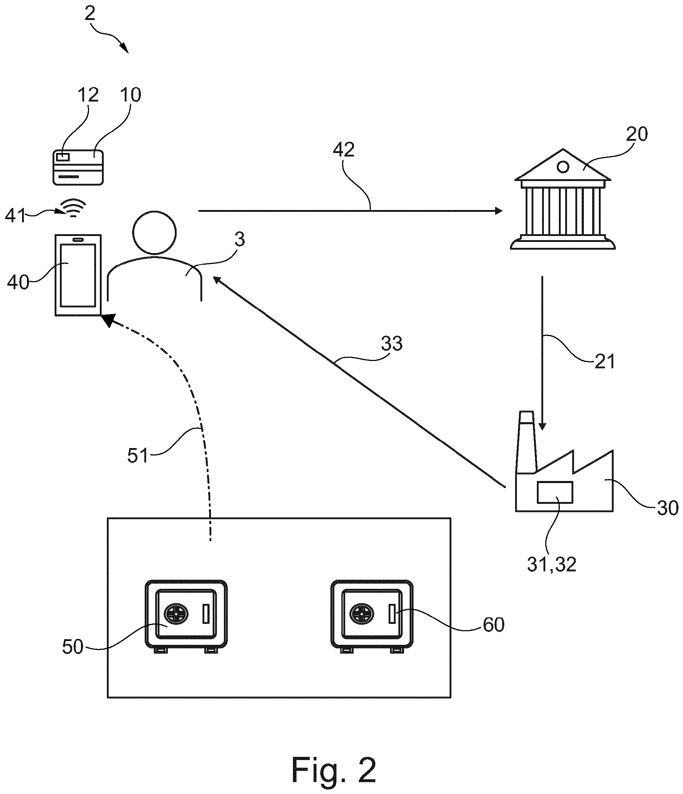

Fig. 2 shows a schematic representation of a system 2 for restoring a user key. In general, the system 2 comprises a mobile device 40, a data carrier 10 having a secure element 12, and an issuer entity 20 configured to receive a restoration request 42 from the mobile device 40 and to verify an identity of a user 3 of the mobile device 40. The issuer entity 20 is configured to provide personalization data 21 upon positive verification of the identity of the user 3 of the mobile device 40. The secure element 12 of the data carrier 10 is configured to generate a main shard 33 using the personalization data 21 and a personalization entity key 32. The mobile device 40 is configured to establish a connection 41 to the data carrier 10 and the secure element 12 of the data carrier 10 is configured to receive at least a first shard 51 from a first server entity 50, wherein the mobile device 40 is configured cause the secure element 12 of the data carrier 10 to restore a user key based on the received first shard 51 and the generated main shard 33.

In the following, the inventive restoration system 2 will be explained in more detail regarding the different steps performed by the different entities and components of the system 2. In particular, when a data carrier 10 of the user 3 gets lost, a new data carrier 10 and a restoration of a user key, e.g., master key, may be required. This restoration system 2 is configured to provide this restoration of the user key.

In a first step, the user 3 may send a restoration request 42 from the user's mobile device 40 to the issuer entity 20, in particular the same issuer entity 20 that was part of the initialization process as described with respect to Fig. 1.

In a further step, the issuer entity 20 may verify an identity of the user 3 of the mobile device 40 by sending an authentication request to the mobile device 40 of the user 3. The user 3 may then verify its identity. Once the identity of the user 3 is verified, the issuer entity 20 may issue, in a further step, a backup or new data carrier 10, for example card-like data carrier, including the above-mentioned personalization data 21 maintained in the issuer entity 20. This personalization data 21 may then be encrypted and/or forwarded to a personalization entity 30.

Upon positive verification of the identity of the user 3 of the mobile device 40, the issuer entity 20 may thus provide the personalization data 21 to the personalization entity 30, e.g., to the same personalization entity 30 that is part of the initialization system 1 as described with respect to Fig. 1.

In a further step, the personalization data 21 may be stored at the issuer entity 20. Preferably, the personalization data 21 is only stored at the issuer entity 20.

Once the personalization data 21 was forwarded to the personalization entity 30, the personalization entity 30 may provide the personalization entity key 32 which may be maintained in a storage module 31, e.g., in a hardware secure module (HSM), of the personalization entity 30.

In a further step, the personalization data 21 and a personalization entity key 32 may be used to generate, e.g., calculate, a main shard 33 by the secure element 12 of the new data carrier 10. The main shard 33 may match the main shard 33 that was generated by the initialization system 1 as described with respect to Fig. 1. The secure element 12 itself may generate, e.g., calculate, the main shard 33 based on the personalization data 21 and a personalization entity key 32. The main shard 33 may be calculated by the secure element 12 after production of the new data carrier 10 into which the secure element 12 is integrated. This means that the calculation of the main shard 33 may carried out only during personalization of the new data carrier 10 when the personalization data 21 and the personalization entity key 32 are available to the secure element 12.

In a further step, the new data carrier 10 together with the main shard 33 may be sent to the user 3 where the activation of the new data carrier 10 can be initiated. In a further step, a connection 41 between the mobile device 40 and the new data carrier 10 is established, for example based on Near Field Communication (NFC) technology.

In a further step, the first shard 51 may be received from the first server entity 50 by the secure element 12 of the new data carrier 10. The user key can then be restored based on the received first shard 51 from the first server entity 50 and the generated main shard 33 maintained in the secure element 12 of the data carrier 10. A second server entity 60 may have stored a second shard which could be alternatively received by the secure element 12 of the new data carrier 10.

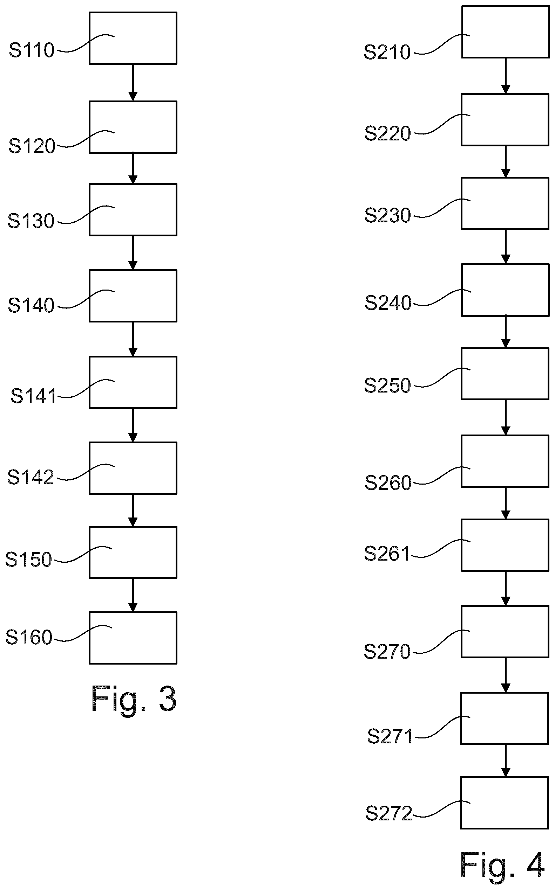

Fig. 3 shows a flow diagram of a method for initializing a data carrier. This method may be carried out by the initialization system 1 as described with respect to Fig. 1.

A step S110 of the method comprises providing personalization data 21 by an issuer entity 20. A step S120 of the method comprises using the personalization data 21 and a personalization entity key 32 to generate a main shard 33 by a secure element 12 of a data carrier 10. A step S130 of the method comprises establishing a connection 41 between a mobile device 40 and the data carrier 10. A step S140 of the method comprises activating the data carrier 10 using the mobile device 40, wherein activating the data carrier 10 comprises generating at least a first shard 51 and a second shard 61 by the secure element 12 of the data carrier 10. An optional step S141 of the method may comprise encrypting the first shard 51 by the secure element 12 and an optional step S142 of the method may comprise encrypting the second shard 61 by the secure element 12. A step S150 of the method comprises transmitting the (encrypted) first shard 51 to a first server entity 50 and transmitting the (encrypted) second shard 61 to a second server entity 60. A step S160 of the method comprises storing the (encrypted) first shard 51 in the first server entity 50 and the (encrypted) second shard 61 in the second server entity 60.

Fig. 4 shows a flow diagram of a method for restoring a user key. This method may be carried out by the restoration system 2 as described with respect to Fig. 2.

A step S210 of the method comprises receiving a restoration request 42 from a mobile device 40 of a user 3 at an issuer entity 20. A step S220 of the method comprises verifying an identity of the user 3 of the mobile device 40 at the issuer entity 20. A step S230 of the method comprises providing personalization data 21 by the issuer entity 20 upon positive verification of the identity of the user 3 of the mobile device 40. A step S240 of the method comprises using the personalization data 21 and a personalization entity key 32 to generate a main shard 33 by a secure element 12 of a data carrier 10. A step S250 of the method comprises establishing a connection 41 between the mobile device 40 and the data carrier 10. A step S260 of the method comprises receiving at least a first shard 51 from a first server entity 50 by the secure element 12 of the data carrier 10. An optional step S261 of the method may comprise receiving a second shard 61 from a second server entity 60 by the secure element 12 of the data carrier 10. A step S270 of the method comprises restoring a user key based on the received first shard 51 from the first server entity 50 and the generated main shard 33. An optional step S271 of the method may comprise restoring the user key based on the received second shard 61 from a second server entity 60 and the generated main shard 33. An optional step S272 of the method may comprise enabling access to a digital asset of the user 3 and/or a bank account of the user 3 upon restoring the user key.

## Claims

1. A method of initializing a data carrier (10), comprising:
providing personalization data (21) by an issuer entity (20, S110);
using the personalization data (21) and a personalization entity key (32) to generate a main shard (33) by a secure element (12) of a data carrier (10, S120);
establishing a connection (41) between a mobile device (40) and the data carrier (10, S130);
activating the data carrier (10) using the mobile device (40), wherein activating the data carrier (10) comprises generating at least a first shard (51) and a second shard (61) by the secure element (12) of the data carrier (10, S140);
transmitting the first shard (51) to a first server entity (50) and the second shard (61) to a second server entity (60, S150);
storing the first shard (51) in the first server entity (50) and the second shard (61) in the second server entity (60, S160).

2. The method according to claim 1,
wherein activating the data carrier (10) further comprises verifying a restoration functionality provided by the first shard (51) and a restoration functionality provided by the second shard (61).

3. The method according to claim 2,
wherein the restoration functionality provided by the first shard (51) is verified by retrieving, by the mobile device (40), the first shard (51) from the first server entity (50); and/or
wherein the restoration functionality provided by the second shard (61) is verified by retrieving, by the mobile device (40), the second shard (61) from the second server entity (60).

4. The method according any one of claims 2 to 3,
wherein activating the data carrier (10) comprises enabling at least one functionality provided by the data carrier (10) upon a positive verification of the restoration functionality provided by the first shard (51) and the restoration functionality provided by the second shard (61).

5. The method according any one of the preceding claims,
wherein the main shard (33) is mathematically correlated to the first shard (51); and/ or
wherein the main shard (33) is mathematically correlated to the second shard (61).

6. The method according any one of the preceding claims,
wherein the first shard (51) and/or the second shard (61) are generated by the secure element (12) using a secret sharing algorithm.

7. The method according any one of the preceding claims, further comprising:
encrypting the first shard (51) by the secure element (12) before transmitting the first shard (51) to the first server entity (50, S141); and/or
encrypting the second shard (61) by the secure element (12) before transmitting the second shard (61) to the second server entity (60, S142).

8. The method according any one of the preceding claims,
wherein transmitting the first shard (51) to the first server entity (50) comprises transmitting the first shard (51) from the secure element (12) of the data carrier (10) to the mobile device (40) and transmitting the first shard (51) from the mobile device (40) to the first server entity (50); and/or
wherein transmitting the second shard (61) to the second server entity (60) comprises transmitting the second shard (61) from the secure element (12) of the data carrier (10) to the mobile device (40) and transmitting the second shard (61) from the mobile device (40) to the second server entity (60).

9. The method according any one of the preceding claims,
wherein the data carrier (10) is a card-like data carrier, in particular a chip card, a payment card, an identity card or a smart card.

10. A method of restoring a user key, comprising:
receiving a restoration request (42) from a mobile device (40) of a user (3) at an issuer entity (20, S210);
verifying an identity of the user (3) of the mobile device (40) at the issuer entity (20, S220);
upon positive verification of the identity of the user (3) of the mobile device (40), providing personalization data (21) by the issuer entity (20, S230);
using the personalization data (21) and a personalization entity key (32) to generate a main shard (33) by a secure element (12) of a data carrier (10, S240);
establishing a connection (41) between the mobile device (40) and the data carrier (10, S250);
receiving at least a first shard (51) from a first server entity (50) by the secure element (12) of the data carrier (10, S260);
restoring a user key based on the received first shard (51) from the first server entity (50) and the generated main shard (33, S270).

11. The method according to claim 10, further comprising:
receiving a second shard (61) from a second server entity (60) by the secure element (12) of the data carrier (10, S261);
restoring the user key based on the received second shard (61) from the second server entity (60) and the generated main shard (33, S271).

12. The method according to any one of claims 10 to 11,
wherein the user key is associated to a functionality provided by the data carrier (10).

13. The method according to any one of claims 10 to 12, further comprising:
enabling access to a digital asset of the user (3) and/or a bank account of the user (3) upon restoring the user key (S272).

14. A system (1) for initializing a data carrier (10), comprising:
an issuer entity (20) configured to provide personalization data (21);
a data carrier (10) having a secure element (12) configured to use the personalization data (21) and a personalization entity key (32) to generate a main shard (33);
a mobile device (40) configured to establish a connection (41) to the data carrier (10);
a first server entity (50) and a second server entity (60);
wherein the mobile device (40) is configured to activate the data carrier (10) by causing the secure element (12) of the data carrier (10) to generate at least a first shard (51) and a second shard (61);
wherein the mobile device (40) is configured to retrieve the first shard (51) and the second shard (61) from the secure element (12) of the data carrier (10) and to transmit the first shard (51) to the first server entity (50) and the second shard (61) to the second server entity (60);
wherein the first server entity (50) is configured to store the first shard (51) and the second server entity (60) is configured to store the second shard (61).

15. A system (2) for restoring a user key, comprising:
a mobile device (40);
a data carrier (10) having a secure element (12);
an issuer entity (20) configured to receive a restoration request (42) from the mobile device (40) and to verify an identity of a user (3) of the mobile device (40);
wherein the issuer entity (20) is configured to provide personalization data (21) upon positive verification of the identity of the user (3) of the mobile device (40);
wherein the secure element (12) of the data carrier (10) is configured to generate a main shard (33) using the personalization data (21) and a personalization entity key (32);
wherein the mobile device (40) is configured to establish a connection (41) to the data carrier (10);
wherein the secure element (12) of the data carrier (10) is configured to receive at least a first shard (51) from a first server entity (50);
wherein the mobile device (40) is configured cause the secure element (12) of the data carrier (10) to restore a user key based on the received first shard (51) and the generated main shard (33).
